# EUROPEAN PATENT APPLICATION

(11) **EP 4 056 614 A1**
(43) Date of publication of application: **14.09.2022**
(21) Application number: 21305271.5
(22) Date of filing: 08.03.2021
(51) Int. Cl.: C08G 18/10, C08G 18/32, C08G 18/42, C08G 18/44, C08G 18/48, C08G 18/66, C08L 75/08, C09D 175/06, C08G 18/08

(54) **AQUEOUS DISPERSION OF POLYURETHANE**

(71) Applicant: Bostik SA, 92700 Colombes (FR)
(72) Inventor: DUFOUR, Stéphane, 60280 VENETTE (FR)
(74) Representative: Arkema Patent

(57) **Abstract**

The present invention concerns an aqueous dispersion comprising water and a mixture of:
- A) an aqueous dispersion comprising water and a polyurethane polymer A-1) obtained by reacting at least the following components:
(a) a polyisocyanate compound;
(b) a polyol compound comprising :
(c) an emulsifier;

- B) an aqueous dispersion other than A) comprising water and a polyurethane polymer B-1) obtained by reacting at least the following components:
(i) a diisocyanate ;
(ii) at least one polyether polyol having a number average molecular weight (Mn) ranging from 500 to 10 000 g/mol;
(iii) an amino compound having an amino functionality higher or equal to 1;
(iv) a compound comprising at least one isocyanate-reactive group and at least one ionic or potentially ionic group;

wherein said polyurethane B-1) is amorphous.

## Description

The present invention relates to an aqueous dispersion based on a mixture of aqueous polyurethane dispersions.

The present invention also relates to the uses of said aqueous dispersion.

### BACKGROUND

Aqueous dispersion of polyurethane are known. They are suitable for various applications such as adhesives for bonding different type of substrates like textile, rubber materials, plastics, leather etc. Some aqueous dispersions of polyurethane require temperature activation for activating the adhesive layer and bonding the substrates. One drawback of said dispersions is that the temperature required for activating the adhesive layer is high which may damage sensitive substrates.

Attempts to reduce the activation temperature by the addition of solvents, plasticizers or resins result in undesirable loss of strength of the bonds.

Other aqueous adhesive dispersions of polyurethane does not require temperature activation, and can bond substrate only by contact bonding. The industry is still seeking for versatile adhesive that will be able to be used in different joints assembly method like wet assembly, pressure-sensitive, contact bonding with or without temperature activation.

There is a need for new versatile aqueous dispersion adhesive that will exhibit good bonding properties within a large range of temperature, and especially at low temperature.

There is also a need for new aqueous dispersion adhesive that will maintain good bonding properties after ageing with humid conditions and/or high temperature.

### DESCRIPTION OF THE INVENTION

The present invention concerns an aqueous dispersion comprising water and a mixture of:
- A) an aqueous dispersion comprising water and a polyurethane polymer A-1) obtained by reacting at least the following components:
   (a) a polyisocyanate compound;
   (b) a polyol compound comprising :
      (b1) a mixture of a polyester polyol (b2) and of a polycarbonate polyol (b3), each having a number-average molecular weight (Mn) higher or equal to 500 g/mol;
      (b4) a polyester-polycarbonate polyol having a number-average molecular weight (Mn) higher or equal to 500 g/mol; or
      (b5) a mixture of a polyester-polycarbonate polyol (b4) as defined above and at least one polyol selected from polyester polyol (b2) as defined above, polycarbonate polyol (b3) as defined above, and mixtures thereof;
      provided that in the polyol compound b), the molar ratio -C(=O)-O- / -O-C(=O)-Oranges from 35/65 to 75/25;
   (c) an emulsifier;
   (d) an optional compound comprising at least one isocyanate-reactive group and at least one ionic or potentially ionic group;
   (e) an optional compound comprising at least one isocyanate-reactive group and at least one non-ionic hydrophilic group;
   (f) an optional amino compound having an amino functionality higher or equal to 1;
   (g) an optional diol having a molecular weight lower than 400 g/mol;
- B) an aqueous dispersion other than A) comprising water and a polyurethane polymer B-1) obtained by reacting at least the following components:
   (i) a diisocyanate ;
   (ii) at least one polyether polyol having a number average molecular weight (Mn) ranging from 500 to 10 000 g/mol;
   (iii) an amino compound having an amino functionality higher or equal to 1;
   (iv) a compound comprising at least one isocyanate-reactive group and at least one ionic or potentially ionic group;
   wherein said polyurethane B-1) is amorphous.

Polyurethanes in the sense of this invention also include polyurethane-ureas, which have both urethane groups and urea groups.

Within the context of the invention, amorphous means that the polyurethane has no fusion regions.

Within the context of the invention, a potentially ionic group is a group which is capable of forming an ionic group for example by neutralization with a base.

The solid contents of an aqueous dispersion may be determined according to EN ISO 3251, for example by evaporation at 105°C for at least one hour in a heat chamber.

The pH value of an aqueous dispersion is measured at 23°C using a pH meter.

The number-average molecular weight (Mn) of a polyol is determined by gel permeation chromatography (GPC) in tetrahydrofuran at 23°C. The procedure is in accordance with DIN 55672-1. Polystyrene samples of known molar mass may be used for calibration.

### Aqueous polyurethane dispersion A

### Polyurethane A-1)

### Polyisocyanate (a)

The polyisocyanate compound (a) may comprise hexamethylene diisocyanate, wherein the amount of hexamethylene diisocyanate is not less than 25 wt. % based on that the amount of the polyisocyanate compound (a) is 100 wt.%. The amount of the hexamethylene diisocyanate is preferably not less than 30 wt.%, more preferably not less than 40 wt.% and even more preferably not less than 60 wt.% based on that the amount of the polyisocyanate compound is 100 wt.%.

The polyisocyanate compound (a) may further comprise a polyisocyanate (a-1) other than the hexamethylene diisocyanate.

The amount of the polyisocyanate (a-1) other than the hexamethylene diisocyanate may be not greater than 60 wt. %, preferably not greater than 45% wt. based on that the amount of the polyisocyanate compound (a) is 100 wt. %.

The polyisocyanate (a-1) other than the hexamethylene diisocyanate may be a polyisocyanate having an isocyanate group (NCO) functionality of greater than 1, preferably a polyisocyanate having an isocyanate group functionality of not less than 2.

The polyisocyanate (a-1) other than the hexamethylene diisocyanate may an aliphatic polyisocyanate or a cycloaliphatic polyisocyanate.

The aliphatic polyisocyanate may be selected from the group consisting of butylene diisocyanate, pentamethylene diisocyanate (PDI), 2,2,4-trimethylhexamethylene diisocyanate, 2,4,4-trimethyl 1,6-hexamethylene diisocyanate, 1,8-diisocyanato-4-(isocyanatomethyl)octane, and mixtures thereof.

The cycloaliphatic polyisocyanate may be selected from the group consisting of isomeric bis(4,4'-isocyanatocyclohexyl)methane, 1,4-cyclohexylene diisocyanate, isophorone diisocyanate (IPDI), and mixtures thereof.

The polyisocyanate (a-1) other than the hexamethylene diisocyanate may also be, proportionately, a higher-functional polyisocyanate known per se or a modified polyisocyanate known per se in the field of polyurethane polymer chemistry, for example, a polyisocyanate containing a carbodiimide group, an allophanate group, an isocyanurate group, a urethane group and/or a biuret group.

The polyisocyanate (a-1) other than the hexamethylene diisocyanate is more preferably a cycloaliphatic polyisocyanate, and even more preferably isophorone diisocyanate (IPDI).

### Polyol compound (b)

The polyol compound (b) comprises:
(b1) a mixture of a polyester polyol (b2) and of a polycarbonate polyol (b3), each having a number-average molecular weight (Mn) higher or equal to 500 g/mol;
(b4) a polyester-polycarbonate polyol having a number-average molecular weight (Mn) higher or equal to 500 g/mol; or
(b5) a mixture of a polyester-polycarbonate polyol (b4) as defined above and at least one polyol selected from polyester polyol (b2) as defined above, polycarbonate polyol (b3) as defined above, and mixtures thereof;
   provided that in the polyol compound b), the molar ratio -C(=O)-O- / -O-C(=O)-O- ranges from 35/65 to 75/25, preferably from 35/65 to 75/25, and even more preferably from 45/55 to 65/35.

The molar ratio of ester functions to carbonate functions (-C(=O)-O- / -O-C(=O)-O-) in the polyol compound b) may be determined by NMR.

### Mixture (b1)

In the mixture (b1), the weight ratio of polyester polyol (b2) / polycarbonate polyol (b3) may range from 30/70 to 70/30, preferably from 40/60 to 60/40, and even more preferably from 50/50 to 60/40.

In the mixture (b1), the molar ratio of ester function -C(=O)-O- to carbonate function - O-C(=O)-O- preferably range from 35/65 to 75/25, preferably from 45/55 to 65/35.

The polyester polyol (b2) may have a number-average molecular mass (Mn) ranging from 500 g/mol to 10 000 g/mol, preferably from 750 g/mol to 5 000 g/mol.

The polyester polyol (b2) may be chosen from polyester diols and polyester triols, and preferably from polyester diols.

Among the polyester polyol (b2), examples that may be mentioned include:
- polyester polyols of natural origin, such as castor oil;
- polyester polyols resulting from the polycondensation:
   - of one or more aliphatic (linear or branched) or aromatic polyols,
      with
   - one or more polycarboxylic acids or an ester or anhydride derivative thereof, such as 1,6-hexanedioic acid (adipic acid), dodecanedioic acid, azelaic acid, sebacic acid, adipic acid, 1,18-octadecanedioic acid, phthalic acid, isophthalic acid, terephthalic acid, succinic acid, a fatty acid dimer, a fatty acid trimer, and mixtures of these acids, an unsaturated anhydride, for instance maleic or phthalic anhydride, or a lactone, for instance caprolactone.
- estolide polyols resulting from the polycondensation of one or more hydroxy acids, such as ricinoleic acid, with a diol (examples that may be mentioned include Polycin^{®} D-1000 and Polycin^{®} D-2000 available from Vertellus).

The aliphatic (linear or branched) or aromatic polyols may be selected from the group consisting of ethylene glycol (CAS: 107-21-1), diethylene glycol, triethylene glycol, tetraethylene glycol, 1,2-propanediol, dipropylene glycol, tripropylene glycol, tetrapropylene glycol, 1,6-hexanediol, 1,4-butanediol, 3-ethyl-2-methyl-1,5-pentanediol, 2-ethyl-3-propyl-1,5-pentanediol, 2,4-dimethyl-3-ethyl-1,5-pentanediol, 2-ethyl-4-methyl-3-propyl-1,5-pentanediol, 2,3-diethyl-4-methyl-1,5-pentanediol, 3-ethyl-2,2,4-trimethyl-1,5-pentanediol, 2,2-dimethyl-4-ethyl-3-propyl-1,5-pentanediol, 2-methyl-2-propyl-1,5-pentanediol, 2,4-dimethyl-3-ethyl-2-propyl-1,5-pentanediol, 2,3-dipropyl-4-ethyl-2-methyl-1,5-pentanediol, 2-butyl-2-ethyl-1,5-pentanediol, 2-butyl-2,3-diethyl-4-methyl-1,5-pentanediol, 2-butyl-2,4-diethyl-3-propyl-1,5-pentanediol, 3-butyl-2-propyl-1,5-pentanediol, 2-methyl-1,5-pentanediol (CAS: 42856-62-2), 3-methyl-1,5-pentanediol (MPD, CAS: 4457-71-0), 2,2-dimethyl-1,3-pentanediol (CAS: 2157-31-5), 2,2-dimethyl-1,5-pentanediol (CAS: 3121-82-2), 3,3-dimethyl-1,5-pentanediol (CAS: 53120-74-4), 2,3-dimethyl-1,5-pentanediol (CAS: 81554-20-3), 2,2-dimethyl-1,3-propanediol (neopentyl glycol - NPG, CAS: 126-30-7), 2,2-diethyl-1,3-propanediol (CAS: 115-76-4), 2-methyl-2-propyl-1,3-propanediol (CAS: 78-26-2), 2-butyl-2-ethyl-1,3-propanediol (CAS: 115-84-4), 2-methyl-1,3-propanediol (CAS: 2163-42-0), 2-benzyloxy-1,3-propanediol (CAS: 14690-00-7), 2,2-dibenzyl-1,3-propanediol (CAS: 31952-16-6), 2,2-dibutyl-1,3-propanediol (CAS: 24765-57-9), 2,2-diisobutyl-1,3-propanediol, 2,4-diethyl-1,5-pentanediol, 2-ethyl-1,6-hexanediol (CAS: 15208-19-2), 2,5-dimethyl-1,6-hexanediol (CAS: 49623-11-2), 5-methyl-2-(1-methylethyl)-1,3-hexanediol (CAS: 80220-07-1), 1,4-dimethyl-1,4-butanediol, 1,5-hexanediol (CAS: 928-40-5), 3-methyl-1,6-hexanediol (CAS: 4089-71-8), 3-tert-butyl-1,6-hexanediol (CAS: 82111-97-5), 1,3-heptanediol (CAS: 23433-04-7), 1,2-octanediol (CAS: 1117-86-8), 1,3-octanediol (CAS: 23433-05-8), 2,2,7,7-tetramethyl-1,8-octanediol (CAS: 27143-31-3), 2-methyl-1,8-octanediol (CAS: 109359-36-6), 2,6-dimethyl-1,8-octanediol (CAS: 75656-41-6), 1,7-octanediol (CAS: 3207-95-2), 4,4,5,5-tetramethyl-3,6-dioxa-1,8-octanediol (CAS: 76779-60-7), 2,2,8,8-tetramethyl-1,9-nonanediol (CAS: 85018-58-2), 1,2-nonanediol (CAS: 42789-13-9), 2,8-dimethyl-1,9-nonanediol (CAS: 40326-00-9), 1,5-nonanediol (CAS: 13686-96-9), 2,9-dimethyl-2,9-dipropyl-1,10-decanediol (CAS: 85018-64-0), 2,9-dibutyl-2,9-dimethyl-1,10-decanediol (CAS: 85018-65-1), 2,9-dimethyl-2,9-dipropyl-1,10-decanediol (CAS: 85018-64-0), 2,9-diethyl-2,9-dimethyl-1,10-decanediol (CAS: 85018-63-9), 2,2,9,9-tetramethyl-1,10-decanediol (CAS: 35449-36-6), 2-nonyl-1,10-decanediol (CAS: 48074-20-0), 1,9-decanediol (CAS: 128705-94-2), 2,2,6,6,10,10-hexamethyl-4,8-dioxa-1,11-undecanediol (CAS: 112548-49-9), 1-phenyl-1,11-undecanediol (CAS: 109217-58-5), 2-octyl-1,11-undecanediol (CAS: 48074-21-1), 2,10-diethyl-2,10-dimethyl-1,11-undecanediol (CAS: 85018-66-2), 2,2,10,10-tetramethyl-1,11-undecanediol (CAS: 35449-37-7), 1-phenyl-1,11-undecanediol (CAS: 109217-58-5), 1,2-undecanediol (CAS: 13006-29-6), 1,2-dodecanediol (CAS: 1119-87-5), 2,11-dodecanediol (CAS: 33666-71-6), 2,11-diethyl-2,11-dimethyl-1,12-dodecanediol (CAS: 85018-68-4), 2,11-dimethyl-2,11-dipropyl-1,12-dodecanediol (CAS: 85018-69-5), 2,11-dibutyl-2,11-dimethyl-1,12-dodecanediol (CAS: 85018-70-8), 2,2,11,11-tetramethyl-1,12-dodecanediol (CAS: 5658-47-9), 1,11-dodecanediol (CAS: 80158-99-2), 11-methyl-1,7-dodecanediol (CAS: 62870-49-9), 1,4-dodecanediol (CAS: 38146-95-1), 1,3-dodecanediol (CAS: 39516-24-0), 1,10-dodecanediol (CAS: 39516-27-3), 2,11-dimethyl-2,11-dodecanediol (CAS: 22092-59-7), 1,5-dodecanediol (CAS: 20999-41-1), 6,7-dodecanediol (CAS: 91635-53-9), and mixtures thereof.

The polyester polyol (b2) may be prepared conventionally or may be commercially available. Among the polyester polyol (b2), examples that may be mentioned are Tone^{®} 0240 (sold by Union Carbide), which is a polycaprolactone with a number-average molecular mass (Mn) of about 2000 g/mol and a melting point of about 50°C; Dynacoll^{®} 7360 (sold by Evonik), which results from the condensation of adipic acid with hexanediol and has a number-average molecular mass (Mn) of about 3500 g/mol and a melting point of about 55°C; Dynacoll^{®} 7250 (sold by Evonik): polyester polyol with a viscosity of 180 Pa.s at 23°C, a number-average molecular mass (Mn) equal to 5500 g/mol and a T_{g} equal to -50°C.

The polyester polyol (b2) is preferably a polyester polyol resulting from the polycondensation of adipic acid and an aliphatic polyol, said aliphatic polyol being more preferably 1,4-butanediol.

The polycarbonate polyol (b3) may be obtained by reaction of at least a carbonate compound and a diol, optionally in presence of a catalyst.

The carbonate compound may be selected from the group consisting of diaryl carbonates, dialkyl carbonates, alkylene carbonates, and mixtures thereof.

The carbonate compound may be selected from dimethyl carbonate, diethyl carbonate, diphenyl carbonate, dibutyl carbonate, ethylene carbonate, trimethylene carbonate, 1,2-propylene carbonate, 1,2-butylene carbonate, 1,3-butylene carbonate, 1,2-pentylene carbonate, and mixtures thereof.

The diol may be selected from the group consisting of: ethylene glycol, 1,2-propanediol, 1,3-propanediol, 1,3- butanediol, 1,4-butanediol, 1,6-hexanediol, 1,8-octanediol, neopentyl glycol, 1,4-bishydroxymethylcyclohexane, 2-methyl-1,3-propanediol, 2,2-dimethyl-1,3-propanediol, 2,2-diethyl-1,3-propanediol, 2-butyl-2,ethyl-1,3-propanediol, 2,2,4-trimethyl-1,3-pentanediol, dipropylene glycol, polypropylene glycol, dibutylene glycol, polybutylene glycol, bisphenol A, tetrabromobisphenol A and lactone-modified diols, more preferably 1,6-hexanediol and/or derivative thereof.

Preferably, the diol comprises not less than 40 wt. % of 1,6-hexanediol and/or hexanediol derivatives based on that the amount of the diol is 100 wt%.

The 1,6-hexanediol derivatives are preferably those having a terminal OH group containing an ether group or ester group, for example, products obtained by reacting 1 mol of 1,6-hexanediol with at least 1 mol, preferably 1 to 2 mol, of ε-caprolactone, or by etherifying 1,6-hexanediol with itself to form the di- or trihexylene glycol.

A catalyst may be used which can be any transesterification catalyst well known by the skilled person. Hydroxides, oxides, metal alcoholates, carbonates and organometallic compounds of metals of main groups I, II, III and IV of the periodic table of the elements, of subgroups III and IV, and elements from the rare earth group, particularly compounds of Ti, Zr, Pb, Sn and Sb, are particularly suitable for the processes described herein. Suitable examples include: LiOH, Li₂CO₃, K₂CO₃, KOH, NaOH, KOMe, NaOMe, MeOMgOAc, CaO, BaO, KOt-Bu, TiCl₄, titanium tetraalcoholates or terephthalates, zirconium tetraalcoholates, tin octoate, dibutyltin dilaurate, dibutyltin, bistributyltin oxide, tin oxalate, lead stearate, antimony trioxide, and zirconium tetraisopropylate.

Aromatic nitrogen heterocycles can also be used as can tertiary amines corresponding to R¹R²R³N, where R¹⁻³ independently represents a C4-C30 hydroxyalkyl, a C4 -C30 aryl or a C1-C30 alkyl, particularly trimethylamine, triethylamine, tributylamine, N,N-dimethylcyclohexylamine, N,N-dimethyl-ethanolamine, 1,8-diazabicyclo-(5.4.0)undec-7-ene, 1,4-diazabicyclo-(2.2.2)octane, 1,2-bis(N,N-dimethyl-amino)-ethane, 1,3-bis(N-dimethyl amino)propane and pyridine.

Alcoholates and hydroxides of sodium and potassium (NaOH, KOH, KOMe, NaOMe), alcoholates of titanium, tin or zirconium (e.g. Ti(OPr) 4), as well as organotin compounds are preferably used.

The amount of catalyst present may depend on the type of catalyst and the amount of catalyst. In certain embodiments described herein, the homogeneous catalyst is used in concentrations (expressed as percent by weight of metal with respect to the aliphatic diol used) of up to 1,000 ppm (0.1%), preferably between 1 ppm and 500 ppm (0.05%), most preferably between 5 ppm and 100 ppm (0.01%). After the reaction is complete, the catalyst may be left in the product, or can be separated, neutralized or masked.

Temperatures for the transesterification reaction may range between 120°C and 240°C. The transesterification reaction is typically performed at atmospheric pressure but lower or higher pressures may be used. Vacuum may be applied at the end of the activation cycle to remove any volatiles. Reaction time may depend on variables such as temperature, pressure, type of catalyst and catalyst concentration.

The polycarbonate polyol (b3) may be prepared as disclosed in WO2012/135625, especially as disclosed in the examples.

The polycarbonate polyol (b3) is more preferably a polycarbonate polyol based on dimethyl carbonate and 1,6-hexanediol.

The polycarbonate polyol (b3) may have a number average molecular weight (Mn) ranging from 500 g/mol to 20 000 g/mol, preferably from 500 g/mol to 10 000 g/mol, and more preferably from 750 g/mol to 5 000 g/mol.

Exemplary polycarbonate polyols may be those commercialized under the trade name PolyCD^{™}220 from Arch Chemicals, or DESMOPHEN^{®} polyols from BAYER.

### Polyester-polycarbonate polyol (b4)

The hydroxyl (OH) functionality of the polyester-polycarbonate polyol (b4) may be greater than 1, preferably not less than 1.5, more preferably 1.9 to 2.1 and even more preferably 2.

The polyester-polycarbonate polyol (b4) may have a number average molecular weight (Mn) ranging from 500 g/mol to 20 000 g/mol, preferably from 500 g/mol to 10 000 g/mol, and more preferably from 750 g/mol to 5 000 g/mol.

The polyester polycarbonate polyol (b4) may be obtained by reacting at least one polyester polyol with at least one polycarbonate polyol.

The polyester polyol used to prepare the polyester polycarbonate polyol (b4) may be the polyester polyol (b2) as disclosed above.

The polycarbonate polyol used to prepare the polyester polycarbonate polyol (b4) may be the polycarbonate polyol (b3) as disclosed above.

The reaction may be a transesterification reaction. All soluble catalysts which are known for transesterification reactions may be used as catalysts (homogeneous catalysis), and heterogeneous transesterification catalysts can also be used. The exemplary catalysts described above for the formation of the polycarbonate polyol may also be used for formation of the polyester polycarbonate polyol (b4).

The temperature for transesterification reaction may be between 120°C and 240°C. It is typically performed at atmospheric pressure. Vacuum may be applied at the end of the activation cycle to remove any volatiles. Reaction times may depend on variables such as temperature, pressure, type of catalyst, and catalyst concentration.

The polyester polycarbonate polyol (b4) may be prepared as disclosed in WO2012/135625.

### Mixture (b5)

The mixture (b5) may be a mixture of a polyester-polycarbonate polyol (b4) as described above with a polyester polyol (b2) as described above. All the description and preferred embodiment for (b4) and (b2) disclose above apply here for the mixture (b5).

The mixture (b5) may be a mixture of a polyester-polycarbonate polyol (b4) as described above with a polycarbonate polyol (b3) as described above. All the description and preferred embodiment for (b4) and (b3) disclose above apply here for the mixture (b5).

The mixture (b5) may be a mixture of a polyester-polycarbonate polyol (b4) as described above with a polyester polyol (b2) as described above, and with a polycarbonate polyol (b3) as described above. All the description and preferred embodiment for (b4), (b3) and (b2) disclose above apply here for the mixture (b5).

The mixture (b5) is such that the molar ratio -C(=O)-O- / -O-C(=O)-O- in the polyol compound b) ranges from 35/65 to 75/25, preferably from 35/65 to 75/25, and even more preferably from 45/55 to 65/35.

According to a preferred embodiment, the polyol compound (b) comprises (b1) a mixture of a polyester polyol (b2) and of a polycarbonate polyol (b3), each having a number-average molecular weight (Mn) higher or equal to 500 g/mol.

### Emulsifier (c)

The emulsifier (c) may be fatty alcohol polyether.

The fatty alcohol polyether is preferably aliphatic ethylene glycol polyether and/or aliphatic propylene glycol polyether.

### Optional compound (d)

The component (d) may comprise ionic group, which may be either cationic or anionic in nature. Cationically, anionically dispersing compounds are those comprising, for example, sulfonium, ammonium, phosphonium, carboxylate, sulfonate, phosphonate groups or the groups which can be converted by salt formation into the aforesaid groups (potentially ionic groups) and can be incorporated into the macromolecules by isocyanate-reactive groups which are present. Isocyanate-reactive groups of preferred suitability are hydroxyl and amine groups.

Components (d) are, for example, mono- and dihydroxycarboxylic acids, mono- and diaminocarboxylic acids, mono- and dihydroxysulfonic acids, mono- and diaminosulfonic acids, and also mono- and dihydroxyphosphonic acids or mono- and diaminophosphonic acids and their salts, such as dimethylolpropionic acid, dimethylolbutyric acid, hydroxypivalic acid, N-(2-aminoethyl)-β-alanine, 2-(2-aminoethylamino)ethanesulfonic acid, 1,2- or 1,3-propylenediamine-β-ethylsulfonic acid, ethylenediamine-propyl- or -butyl-sulfonic acid, malic acid, citric acid, glycolic acid, lactic acid, glycine, alanine, taurine, lysine, 3,5-diaminobenzoic acid, an adduct of IPDI and acrylic acid and its alkali metal salts and/or ammonium salts; the adduct of sodium bisulfite with but-2-ene-1,4-diol, polyether sulfonate, the propoxylated adduct of 2-butenediol and NaHSO₃.

Preferred component (d) are those which possess carboxy or carboxylate and/or sulfonate groups and/or ammonium groups. Particularly preferred ionic compounds are those which contain carboxyl and/or sulfonate groups as ionic or potentially ionic groups.

### Optional compound (e)

A compound (e) may be used to prepare the polyurethane polymer A-1) as defined above.

The compound (e) comprising at least one isocyanate-reactive group and at least one non-ionic hydrophilic group may be a polyoxyalkylene ether comprising at least one hydroxyl or amino group.

The polyoxyalkylene ether comprising at least one hydroxyl or amino group may comprise 30 wt % to 100 wt. % ethylene oxide-derived units based on that the amount of the polyoxyalkylene ether comprising at least one hydroxyl or amino group is 100 wt. %; more preferably those comprising 1-3 hydroxyl or amino group(s).

The polyoxyalkylene ether may be a monofunctional polyalkylene oxide polyether alcohol containing on average 5 to 70, preferably 7 to 55, ethylene oxide units per molecule obtainable by alkoxylation of suitable starter molecules.

Suitable starter molecules may be selected from the group consisting of: saturated monoalcohols, unsaturated alcohols, aromatic alcohols, araliphatic alcohols, secondary monoamines, heterocyclic secondary amines, and mixtures thereof.

The saturated monoalcohol may be selected from the group consisting of: methanol, ethanol, n-propanol, isopropanol, n-butanol, isobutanol, sec-butanol, the isomers of pentanol, hexanol, octanol and nonanol, n-decanol, n-dodecanol, n-tetradecanol, n-hexadecanol, n-octadecanol, cyclohexanol, the isomeric methylcyclohexanols or hydroxymethylcyclohexanols, 3-ethyl-3-hydroxymethyloxetane, tetrahydrofurfuryl alcohol, diethylene glycol monoalkyl ethers, and mixtures thereof.

The unsaturated alcohol may be selected from the group consisting of: allyl alcohol, 1,1-dimethylallyl alcohol or oleyl alcohol.

The aromatic alcohol may be selected from the group consisting of: phenols, isomeric cresols and methoxyphenols.

The araliphatic alcohols may be selected from the group consisting of: benzyl alcohol, anisyl alcohol and cinnamyl alcohol.

The secondary monoamine may be selected from the group consisting of: dimethylamine, diethylamine, dipropylamine, diisopropylamine, dibutylamine, bis-(2-ethylhexyl)amine, N-methyl- and N-ethylcyclohexylamine, and dicyclohexylamine.

The heterocyclic secondary amine may be one or more selected from the group consisting of: morpholine, pyrrolidine, piperidine and IH-pyrazole.

Alkylene oxides suitable for an alkoxylation reaction are preferably ethylene oxide and propylene oxide, which can be used in any order or else in a mixture in the alkoxylation reaction.

The polyalkylene oxide polyether alcohol is preferably polyalkylene oxide polyether polyol. The alkylene oxide groups are present in the polyalkylene oxide polyether polyol in an amount of preferably not less than 30 mol% and more preferably not less than 40 mol%.

The polyalkylene oxide polyether polyol is preferably a polyethylene oxide polyether polyol and more preferably a mixed polyalkylene oxide polyether polyol.

### Optional amino compound (f)

The amino compound (f) may be a diamine or a polyamine.

The amino compound (f) may be selected from the group consisting of: ethylene diamine, 1,3-propylene diamine, 1,6-hexamethylene diamine, isophorone diamine, 1,3-phenylene diamine, 1,4-phenylene diamine, 4,4'-diaminodiphenylmethane, amino-functional polyethylene oxide or polypropylene oxide such as Jeffamin RTM series from Huntsman, diethylenetriamine, triethylenetetramine and hydrazine, said amino compound (c) being preferably selected from the group consisting of: isophorone diamine, ethylene diamine and 1,6-hexamethylene diamine. More preferably, the amino compound (f) is isophorone diamine and/or ethylene diamine.

### Optional diol (g)

The diol (g) may be selected from the group consisting of: n-butanol, isobutanol, 2-butoxyethylether, 3-hydroxymethylpropane, glycerol, polyether polyol, polyester polyol, polycarbonate polyol, polylactone polyol, polyamide polyol, ethylene glycol, di-, tri- or tetraethylene glycol, 1,2-propanediol, di-, tri- or tetra-propanediol, 1,3-propanediol, 1,4-butanediol, 1,3-butanediol, 2,3-butanediol, 1,5-pentanediol, 1,6-hexanediol, 2, 2-dimethyl-1,3-propanediol, 1,4-dihydroxylcyclohexane, 1,4-dihydroxylmethyl cyclohexane, 1,8-octanediol, 1,10-decanediol, 1,12-dodecanediol, and mixtures thereof.

### Polyurethane A-1)

The polyurethane A-1) is preferably a non ionic polyurethane.

The polyurethane A-1) has preferably an enthalpy of fusion ranging from 15 J/g to 60 J/g, and more preferably from 20 J/g to 50 J/g.

In a preferred embodiment, the polyurethane A-1) has a glass transition temperature in the range between -100°C and -10°C, more preferably in the range between -60°C and - 20°C, and even more preferably between -60°C and -40°C.

The glass transition temperature Tg and the enthalpy of fusion are determined by means of differential scanning calorimetry (DSC) under a nitrogen atmosphere according to ASTM D3418-15 of 2015. For example, the DSC curve may be recorded using 10 mg of a film of 100 µm (obtained by application of the dispersion and drying), under the following measuring conditions : rapid cooling by means of liquid nitrogen to the starting temperature of -70°C, then the start of a heating operation from -70°C to 200°C at a rate of heating of 10°C/min. The glass transition temperature corresponds to the temperature at the half-eight of the glass transition.

The polyurethane A-1) may be obtained using at least:
(i) 5% to 40% by weight of component (a) as defined above;
(ii) 50% to 95% by weight of component (b) as defined above;
the weight percentages being based on the total weight of the polyurethane A-1) (dry matter).

In a preferred embodiment, the polyurethane A-1) is obtained using at least:
(i) 5% to 40% by weight of a polyisocyanate compound a) comprising hexamethylene diisocyanate and a further polyisocyanate (a-1), preferably isophorone diisocyanate;
(ii) 50% to 95% by weight of a polyol compound b) comprising b1) a mixture of a polyester polyol (b2) and of a polycarbonate polyol (b3), each having a number-average molecular weight (Mn) higher or equal to 500 g/mol,
provided that the molar ratio -C(=O)-O / -O-C(=O)-O- in the polyol compound b) ranges from 35/65 to 75/25;
the molar percentages being based on the total weight of the polyurethane A-1) (dry matter).

### Aqueous dispersion A)

The aqueous dispersion A) may have a pH value of greater than 7.

The solids content of the aqueous dispersion A) may be 20 to 70 wt. %, preferably 30 wt to 65 wt%, and more preferably 35 wt % to 60 wt % based on that the amount of the aqueous dispersion A) is 100 wt %.

The aqueous dispersion A) may be prepared by a method comprising:
- i) reacting the polyisocyanate compound a) with the polyol compound b), in presence of the optional compound (d), or (g) to obtain a polyurethane prepolymer;
- ii) optionally reacting the polyurethane prepolymer with optional compound (e), (f) and/or (g);
- iii) introducing an aqueous medium, and an emulsifier (c) during or after step ii) to obtain the aqueous dispersion.

The polyurethane prepolymer obtained after step i) may be directly the polyurethane A-1) if no step ii) is performed.

The preparation of the aqueous polyurethane dispersion A) can be carried out in one or more stages in a homogeneous phase system, or partly in a disperse phase in the case of a multistage reaction. When the reaction in steps i) and optional step ii) is fully or partially completed, a dispersing, emulsifying or dissolving step is carried out. Further polyaddition or modification in a disperse phase is then optionally carried out.

All the processes known in the prior art can be used for the preparation of the aqueous polyurethane dispersion A), such as emulsifier/shear force, acetone, prepolymer mixing, melt emulsification, ketamine and solid spontaneous dispersion processes or derivatives thereof, more preferably the melt emulsification or acetone process, most preferably the acetone process. A summary of these methods is found in Methoden der organischen Chemie (Houben-Weyl, Erweitenmgs-und zur4. Auflage, Volume E20, H Bartl and J. Falbe, Stuttgart, New York, Thieme 1987, p.1671-1682).

Step i) may be carried out in presence of a catalyst. Step i) may be carried out at a temperature ranging from 50°C to 100°C for example during 3 to 15 hours.

Example of aqueous medium includes water, and a mixed medium of water with a hydrophilic organic solvent.

The hydrophilic solvent may be selected from the group consisting of lower monohydric alcohols such as for example methanol, propanol, ethanol ; polyhydric alcohols such as for example ethylene glycol or glycerin ; N-methylmorpholine ; dimethylsulfoxide ; dimethylformamide.

The aqueous dispersion A) may also be prepared by dispersing the polyurethane A-1) as defined above in an aqueous medium.

The aqueous dispersion A) may also be prepared as disclosed in the examples of WO2015/033939.

### Aqueous polyurethane dispersion B)

### Polyurethane B-1)

### Diisocyanate (i)

The diisocyanate (i) may be selected from the group consisting of toluene-2,4-diisocyanate (2,4-TDI), toluene-2,6-diisocyanate (2,6-TDI), 2,2'-diphenylmethane diisocyanate (2,2'-MDI), 2,4'-diphenylmethane diisocyanate (2,4'-MDI), 4,4'-diphenylmethane diisocyanate (4,4'-MDI), 1,4-diisocyanatobutane (BDI), 1,5-pentane diisocyanate, (PDI), 1,6-diisocyanatohexane (HDI), 1,3-bis (isocyanatomethyl)benzene (1,3-xylylene diisocyanate, XDI), 1,4-bis(isocyanatomethyl)benzene (1,4-xylylene diisocyanate, XDI), 1,3-bis(1-isocyanato-1-methylethyl)benzene (TMXDI), 1,4-bis(1-isocyanato-1-methylethyl)benzene (TMXDI), 4-isocyanatomethyl-1,8-octane diisocyanate (trisisocyanatononane (TIN)), 2-methyl-1,5-diisocyanatopentane, 1,5-diisocyanato-2,2-dimethylpentane, 2,2,4- or 2,4,4 trimethyl-1,6-diisocyanatohexane, 1,10-diisocyanatodecane and the cycloaliphatic diisocyanates 1,3- and 1,4-diisocyanatocyclohexane, 1,4-diisocyanato-3,3,5-trimethylcyclohexane, 1,3-diisocyanato-2(4)-methylcyclohexane, 1-isocyanato-3,3,5-trimethyl-5-isocyanatomethylcyclohexane (isophorone diisocyanate, IPDI), 1-isocyanato-1-methyl-4(3)-isocyanatomethylcyclohexane, 1,8-diisocyanato-p-menthane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 4,4'- and/or 2,4"-diisocyanatodicyclohexylmethane, 4,4'-diisocyanato-3,3'-dimethyldicyclohexylmethane, 4,4'-diisocyanato-3,3',5,5'-tetramethyldicyclohexylmethane, 1,3-diisocyanatoadamantane, and 1,3-dimethyl-5,7-diisocyanatoadamantane or any mixtures of such isocyanates.

The diisocyanate (i) is more preferably selected from the group consisting of 1,4-butylene diisocyanate, 1,6-hexamethylene diisocyanate (HDI), 2,2,4 and/or 2,4,4-trimethylhexamethylene diisocyanate, the isomeric bis(4,4'-isocyanatocyclohexy)methanes or mixtures of any isomer content thereof, 1,4-cyclohexylene diisocyanate, 1,4-phenylene diisocyanate, 2,4- and/or 2,6-toluylene diisocyanate (2,4- and/or 2,6-TDI), 1,5-naphthylene diisocyanate, 2,2'- and/or 2,4'- and/or 4,4'-diphenylmethane diisocyanate, 1,3- and/or 1,4-bis(2-isocyanatoprop-2-yl)benzene (TMXDI), 1,4-xylylene diisocyanate (XDI), 1-isocyanato-3,3,5-trimethyl-5-isocyanatomethylcyclohexane (isophorone diisocyanate, IPDI), and mixtures thereof.

In a preferred embodiment, the diisocyanate (ii) is selected from the group consisting of 2,4-toluylene diisocyanate (2,4-TDI), 2,6- toluylene diisocyanate (2,6-TDI), isophorone diisocyanate (IPDI), 1,4-xylylene diisocyanate (XDI), and mixtures thereof, the diisocyanate (ii) being even more preferably 2,4 and/or 2,6-TDI.

### Polyether polyol (ii)

The polyurethane B-1) is obtained from a reaction mixture comprising (ii) at least one polyether polyol having a number-average molecular weight ranging from 400 g/mol to 10 000 g/mol.

In a preferred embodiment, the polyether polyol (ii) has a number-average molecular weight ranging from 500 g/mol to 8 000 g/mol, and more preferably from 1 000 g/mol to 5 000 g/mol.

The polyether polyol (ii) may be chosen from polyoxyalkylene polyols, the linear or branched alkylene part comprising from 1 to 4 carbon atoms, more preferentially from 2 to 3 carbon atoms.

Preferably, the polyether polyol (ii) is polyoxypropylene polyol.

The abovementioned polyether polyols can be prepared conventionally and are widely available commercially. They can be obtained by polymerization of the corresponding alkylene oxide in the presence of a basic catalyst (for example potassium hydroxide) or of a catalyst based on a double metal/cyanide complex.

As examples of polyether diol, mention may be made of the polyoxypropylene diol sold under the name Voranol^{®} P 1010 by Dow with a number-average molecular weight (Mn) in the vicinity of 1020 g/mol and the hydroxyl number of which is approximately 110 mg KOH/g, or the Voranol^{®} P2000 sold by Dow with a number-average molecular weight in the vicinity of 2040 g/mol and the hydroxyl number of which is approximately 55 mg KOH/g.

A mixture of polyether polyols (ii) may be used for preparing the polymer B-1), the polyether polyols differing in their number-average molecular weight and/or in the nature of their structural elements.

### Component (iii)

The components (iii) is particularly suitable for chain extension and/or termination of the polyurethane prepolymer.

The amino compound having an amino functionality higher or equal to 1 may be selected from polyamines and amino-alcohols.

Among amino-alcohols, mention may be made of 1,3-diami,o-2-propanol, N-(2-hydroxyethyl)-ethylenediamine or N,N-bis(2-hydroxy-ethyl)-ethylenediamine.

Preferred components (iii) are di-and polyamines, and more preferably chosen from the group selected from 1,2-diaminoethane, 1,3-diaminopropane, 1,6-diaminohexane, 1,3- and 1,4-phenylenediamine, 4,4'-diphenylmethanediamine, isophoronediamine, isomer mixture of 2,2,4- and 2,4,4-trimethyl-hexamethylenediamine, 2-methylpentamethylenediamine, diethylenetriamine, 1,3- and 1,4-xylylenediamine, α,α,α,α'-tetramethyl-1,3- and -1,4-xylylenediamine, 4,4-diaminodicyclohexylmethane, amino-functional polyethylene oxides or polypropylene oxides which are available for example under the Jeffamine name, D series (from Huntsman Corp. Europe, Belgium), diethylenetriamine and triethylenetetramine.

Component (iii) is preferably 1,2-diaminoethane.

### Component (iv)

The component (iv) may comprise ionic group, which may be either cationic or anionic in nature. Cationically, anionically dispersing compounds are those comprising, for example, sulfonium, ammonium, phosphonium, carboxylate, sulfonate, phosphonate groups or the groups which can be converted by salt formation into the aforesaid groups (potentially ionic groups) and can be incorporated into the macromolecules by isocyanate-reactive groups which are present. Isocyanate-reactive groups of preferred suitability are hydroxyl and amine groups.

Components (iv) are, for example, mono- and dihydroxycarboxylic acids, mono- and diaminocarboxylic acids, mono- and dihydroxysulfonic acids, mono- and diaminosulfonic acids, and also mono- and dihydroxyphosphonic acids or mono- and diaminophosphonic acids and their salts, such as dimethylolpropionic acid, dimethylolbutyric acid, hydroxypivalic acid, N-(2-aminoethyl)-β-alanine, 2-(2-aminoethylamino)ethanesulfonic acid, 1,2- or 1,3-propylenediamine-β-ethylsulfonic acid, ethylenediamine-propyl- or -butyl-sulfonic acid, malic acid, citric acid, glycolic acid, lactic acid, glycine, alanine, taurine, lysine, 3,5-diaminobenzoic acid, an adduct of IPDI and acrylic acid and its alkali metal salts and/or ammonium salts; the adduct of sodium bisulfite with but-2-ene-1,4-diol, polyether sulfonate, the propoxylated adduct of 2-butenediol and NaHSO₃.

Preferred component (iv) are those which possess carboxy or carboxylate and/or sulfonate groups and/or ammonium groups. Particularly preferred ionic compounds are those which contain carboxyl and/or sulfonate groups as ionic or potentially ionic groups.

In a preferred embodiment, the component (iv) is chosen among the sodium salts of N-(2-aminoethyl)-β-alanine, the sodium salts of 2-(2-aminoethylamino)ethanesulfonic acid and dimethylolpropionic acid.

### Optional components (v)

In addition to components (i) to (iv), the polymer B-1) may be obtained from a mixture further comprising at least one additional component (v).

The component (v) may be (v-1) one polymeric polyol different from polyether polyol (i), (v-2) a polyol having a number average molecular weight ranging from 62 to 399 g/mol, (v-3) an emulsifier.

The component (v-1) may be a polymeric polyol having a number-average molecular weight ranging from 400 to 10 000 g/mol selected from the group consisting of polyesters, polycarbonates, polylactones and polyamides.

The component (v-1) may have a number-average molecular weight ranging from 500 g/mol to 8 000 g/mol, and more preferably from 1 000 g/mol to 5 000 g/mol.

Polyester polyols are, for example, the polycondensates, known per se, of diols and also, optionally, triols and tetraols and of dicarboxylic acids and also, optionally, tricarboxylic and tetracarboxylic acids or hydroxycarboxylic acids or lactones. Instead of the free polycarboxylic acids it is also possible to use the corresponding polycarboxylic anhydrides or corresponding polycarboxylic esters of lower alcohols in order to prepare the polyesters.

Examples of diols suitable may be ethylene glycol, butylene glycol, diethylene glycol, triethylene glycol, polyalkylene glycols such as polyethylene glycol, and also 1,2-propanediol, 1,3-propanediol, butane-1,3-diol, butane-1,4-diol, hexane-1,6-diol and isomers, neopentyl glycol or neopentyl glycol hydroxypivalate. In addition it is also possible to use polyols such as trimethylolpropane, glycerol, erythritol, pentaerythritol, trimethylolbenzene or trishydroxyethyl isocyanurate.

Dicarboxylic acids which may be used are phthalic acid, isophthalic acid, terephthalic acid, tetrahydrophthalic acid, hexahydrophthalic acid, cyclohexanedicarboxylic acid, adipic acid, succinic acid, azelaic acid, sebacic acid, glutaric acid, tetrachlorophthalic acid, maleic acid, fumaric acid, itaconic acid, malonic acid, suberic acid, 2-methylsuccinic acid, 3,3-diethylglutaric acid and/or 2,2-dimethylsuccinic acid. The corresponding anhydrides as well can be used as an acid source.

Hydroxycarboxylic acids, which may be used additionally as reaction participants in the preparation of a polyester polyol having terminal hydroxyl groups, are, for example, hydroxycaproic acid, hydroxybutyric acid, hydroxydecanoic acid, hydroxystearic acid, and the like. Suitable lactones may be caprolactone, butyrolactone, and homologs.

The polycarbonates containing hydroxyl groups may be obtained by reaction of carbonic acid derivatives, as for example diphenyl carbonate, dimethyl carbonate or phosgene, with diols. Suitable such diols include, for example, ethylene glycol, 1,2- and 1,3-propanediol, 1,3- and 1,4-butanediol, 1,6-hexanediol, 1,8-octanediol, neopentyl glycol, 1,4-bishydroxymethylcyclohexane, 2-methyl-1,3-propanediol, 2,2,4-trimethylpentane-1,3-diol, dipropylene glycol, polypropylene glycols, dibutylene glycol, polybutylene glycols, bisphenol A, tetrabromobisphenol A, and also lactone-modified diols.

The component (v-2) may be a polyol having up to 20 carbon atoms.

The polyol (v-2) may be selected from the group consisting of ethylene glycol, diethylene glycol, triethylene glycol, propane-1,2-diol, propane-1,3-diol, butane-1,4-diol, 1,3-butylene glycol, cyclohexanediol, cyclohexane-1,4-dimethanol, hexane-1,6-diol, neopentyl glycol, hydroquinone dihydroxyethyl ether, bisphenol A (2,2-bis(4-hydroxyphenyl)propane), hydrogenated bisphenol A (2,2-bis(4-hydroxycyclohexyl)propane), trimethylolpropane, trimethylolethane, glycerol, pentaerythritol and mixtures thereof.

The component (v-3) may be fatty alcohol polyether.

The fatty alcohol polyether may be aliphatic ethylene glycol polyether and/or aliphatic propylene glycol polyether.

### Polyurethane B-1)

The polyurethane B-1) may comprise carboxylic groups or carboxylate groups. The content of carboxylic and/or carboxylate groups within the polyurethane B-1) may range from 0.01% to 10% by weight, preferably from 0.02% to 8% by weight based on the total weight of said polyurethane B-1) (dry matter).

The polyurethane B-1) is preferably an anionic polyurethane comprising at least one anionic group.

In a preferred embodiment, the polyurethane B-1) has a glass transition temperature Tg ranging from -60°C to 0°C, preferably from -60°C to -20°C, more preferably from -60°C to -40°C, and even more preferably from -60°C to -40°C.

The glass transition temperature Tg is determined by means of differential scanning calorimetry (DSC) under a nitrogen atmosphere according to ASTM D3418-15 of 2015. For example, the DSC curve may be recorded using 10 mg of a film of 100 µm (obtained by application of the dispersion and drying), under the following measuring conditions : rapid cooling by means of liquid nitrogen to the starting temperature of -70°C, then the start of a heating operation from -70°C to 200°C at a rate of heating of 10°C/min. The glass transition temperature corresponds to the temperature at the half-eight of the glass transition.

The polyurethane B-1) is preferably obtained using at least:
(i) 55% to 90% by weight of component (i) as defined above;
(ii) 5% to 50% by weight of component (ii) as defined above;
(iii) 0.1% to 10% by weight of component (iii) as defined above ;
(iv) 0.1% to 10% by weight of component (iv) as defined above;
the weight percentages being based on the total weight of the polyurethane B-1) (dry matter).

The polyurethane B-1) is preferably obtained using at least:
(i) 55% to 90% by weight of component (i) as defined above;
(ii) 10% to 40% by weight of component (ii) as defined above;
(iii) 0.5% to 5% by weight of component (iii) as defined above ;
(iv) 1% to 5% by weight of component (iv) as defined above;
the weight percentages being based on the total weight of the polyurethane B-1) (dry matter).

### Aqueous dispersion B)

The aqueous dispersion B) may have a pH value of greater than 7.

The solids content of the aqueous dispersion B) may be 10 to 60 wt. %, preferably 20 wt to 55 wt%, and more preferably 30 wt % to 50 wt % based on that the total amount of said dispersion B).

In a preferred embodiment, the aqueous polyurethane dispersion B) comprises a polyurethane B-1) obtained by the reaction of at least the following components:
(i) a diisocyanate being 2,4-TDI and/or 2,6-TDI ;
(ii) at least one polyoxypropylene polyol having a number-average molecular weight ranging from 400 to 10 000 g/mol, and more preferably from 500 g/mol to 5 000 g/mol;
(iii) a di- or polyamine selected from the group consisting of 1,2-diaminoethane, 1,3-diaminopropane, 1,6-diaminohexane, 1,3- and 1,4-phenylenediamine, 4,4'-diphenylmethanediamine, isophoronediamine, isomer mixture of 2,2,4- and 2,4,4-trimethyl-hexamethylenediamine, 2-methylpentamethylenediamine, diethylenetriamine, 1,3- and 1,4-xylylenediamine, α,α,α,α'-tetramethyl-1,3- and -1,4-xylylenediamine, 4,4-diaminodicyclohexylmethane, amino-functional polyethylene oxides or polypropylene oxides, diethylenetriamine and triethylenetetramine, said di- or polyamine having a molar weight lower or equal to 400 g/mol;
(iv) one component selected from the group consisting of the sodium salts of N-(2-aminoethyl)-β-alanine, the sodium salts of 2-(2-aminoethylamino)ethanesulfonic acid and dimethylolpropionic acid;
wherein said polyurethane B-1) is amorphous

The aqueous dispersion B) may be prepared in one or more stages in homogeneous phase or, in the case of multistage reaction, partially in a disperse phase. After complete or partial polyaddition, there may be a dispersing, emulsifying or dissolving step. This is optionally followed by a further polyaddition or modification in disperse phase.

The aqueous dispersion B) may be prepared by a process known from the prior art such as emulsifier shearing force, prepolymer mixing, melt emulsifying, ketamine, acetone... Particularly preferred is the acetone process.

In the acetone process, typically, all or some of the diisocyanate (i), the polyether polyol (ii), optional polyol, optional compound comprising at least one isocyanate-reactive group and at least one non-ionic may be firstly introduced for reaction to prepare a polyurethane prepolymer, and these components may be optionally diluted with a solvent that is miscible with water but inert towards an isocyanate group, but preferably heated to an elevated temperature, preferably 50-120°C rather than use of a solvent. The solvent may be one or more selected from the group consisting of: acetone, butanone, ethyl acetate, tetrahydrofuran, dioxane, acetonitrile, dipropylene glycol dimethyl ether and 1-methyl-2-pyrrolidone, preferably acetone and/or butanone. The solvent can be added not only at the beginning of the preparation, but also may optionally be added in parts later. A reaction may occur under normal pressure or elevated pressure. To accelerate the reaction of step, a catalyst commonly used in the preparation of a polyurethane prepolymer can be used, for example, triethylamine, 1,4--diazabicyclo-[2,2,2]-octane, tin dioctoate or dibutyltin dilaurate. The solvent present in the aqueous polyurethane dispersion may be removed by distillation. The solvent may be removed at any step.

For preparing the aqueous dispersion B), the polyurethane B-1) may be introduced into the dispersing water, or conversely, the dispersing water may be stirred into the polyurethane B-1).

The aqueous dispersion B) may also be a commercialized one. Mention may be made of Dispercoll^{®} U XP 2643 from COVESTRO DEUTSCHLAND AG (aqueous anionically dispersion of high molecular weight, amorphous polyurethane).

### Aqueous dispersion and its uses

The aqueous dispersion as defined above may comprise:
- from 30 wt% to 90 wt%, preferably from 40 wt% to 80 wt % of dispersion A) as defined above, and
- from 10 wt% to 70 wt%, preferably from 25 wt% to 55 wt% of dispersion B) as defined above,
based on the total weight of said aqueous dispersion.

The aqueous dispersion may be obtained by the mixing of the aqueous dispersions A) and B) as defined above.

The aqueous dispersion as defined above may have a solid contents ranging from 30% to 60% wt., more preferably from 40 wt% to 50 wt%.

The aqueous dispersion may have a Brookfield viscosity at 23°C ranging from 50 mPa.s to 10 000 mPas, preferably from 50 mPas to 5 000 mPas, and even more preferably from 100 mPas to 2 500 mPas.

The pH of the aqueous dispersion at 23°C may range from 7 to 10, preferably from 7.5 to 9.5, and even more preferably from 7.8 to 9.

The present invention also concerns a composition comprising the aqueous dispersion of the invention as defined above.

The composition may comprise at least one additive known in the art.

The additive may be selected from the group consisting of lubricants, emulsifiers, light stabilizers, antioxidants, fillers, anti-settling agents, defoamers, wetting agents, flow modifiers, antistatic agents, film-forming assistants, reactive diluents, plasticizers, neutralizing agents, catalysts, thickeners, pigments, dyes, tackifiers, matting agents, and mixtures thereof.

The light stabilizers may be UV absorbers and/or sterically hindered amines.

The selection and amount of the additive are in principle known to the ordinary skilled in the art, and can be easily determined.

The composition may be obtained by the mixing of the aqueous dispersion as defined above with optional additive(s) as defined above.

The present invention also relates to the use of the aqueous dispersion or the composition as defined above as an adhesive.

The present invention relates to the use of the aqueous dispersion or the composition for bonding any substrate such as for example textiles, non woven textiles, leather, rubber materials, plastics.

The present invention relates to a method of assembling two substrates by bonding, comprising:
- the application of the aqueous dispersion according to the invention or the composition according to the invention on at least one substrate;
- the evaporation of water;
- an optional step of heating the adhesive layer formed on one surface of the substrate to a temperature T1;
- the contact bonding of the two substrates.

The heating step may be carried out using an infra-red radiator.

The temperature T1 may range from 30°C to 80°C, preferably from 40°C to 60°C.

The aqueous dispersion/composition as defined can advantageously be used on a large spectrum of temperature ranging preferably from 15°C to 80°C, and more preferably from 23°C to 60°C, depending on the nature of the substrates to be adhered.

The aqueous dispersion/composition as defined is advantageously versatile given that it can be used either with or without heating step for bonding substrates together. The resulting adhesive can advantageously lead to good adhesive properties even while heating to a low temperature (such as lower than 80°C, and preferably lower than 60°C.This property advantageously allows to avoid deterioration of sensitive substrates that will not tolerate high temperatures, while providing good adhesive properties.

Another advantage of the aqueous dispersion is their resistance to hydrolysis and the homogeneity of the films obtained therewith.

The aqueous dispersion/composition according to the invention advantageously exhibit good bonding properties even after ageing with humid conditions and/or high temperature. It advantageously exhibits good resistance to thermal conditions and to hydrolysis.

According to the present invention, by « comprised between x and y », or « ranging from x to y », or "x to y", or "ranging between x and y", it is meant a range wherein limits x and y are included. For example, the range "comprising between 1% and 3%" includes in particular 1% and 3%.

### EXPERIMENTAL PART

### Test methods

The peak melting temperature and enthalpy of fusion (ΔH) of the dried, heat curable adhesive film is determined.

The glass transition temperature Tg and the enthalpy of fusion of the dried film adhesive are determined by means of differential scanning calorimetry (DSC) under a nitrogen atmosphere according to ASTM D3418-15 of 2015 using a Perkin Elmer, Pyris 1.The DSC curve are recorded using 10 mg of a film of 100 µm (obtained by application of the dispersion and drying), under the following measuring conditions : rapid cooling by means of liquid nitrogen to the starting temperature of -70°C, then the start of a heating operation from -70°C to 200°C at a rate of heating of 10°C/min. The glass transition temperature corresponds to the temperature at the half-eight of the glass transition.

The following ingredients were used for the preparation of the aqueous dispersion:
- aqueous dispersion A: a semi-crystalline non-ionic poly(butanediol-adipate)/poly(hexanediol)carbonate-based polyurethane aqueous dispersion having 48 % of solids content , a viscosity lower than 1 000 mPa.s and a pH value ranging from 6 to 9 ;
- aqueous dispersion B: DISPERCOLL U XP 2643 available from COVESTRO : aqueous amorphous polyether-based polyurethane dispersion based on a polypropylene glycol, dimethylolpropionic acid, ethylenediamine having approx. 40 % of solids content, a viscosity lower than 1,000 mPa.s and a pH value ranging from 6 to 9.

### Example 1

500 g of the aqueous polyurethane dispersion A are added slowly under stirring in 500 g of the aqueous polyurethane dispersion B (Dispercoll U XP 2643) at 23°C. The stirring occurred until homogenous mixture was formed. The aqueous dispersion formed is D1.

### Example 2 : 180° Peel Strength at 23°C

### Substrates : leather on leather

Two pieces of 150mm x 25mm piece of leather were prepared.

The aqueous dispersion D1 was applied on both pieces by brush of spray gun (wet spreading rate app. 80 to 100 g/m2) on one side.

For the activated test: The adhesive was dried during 20 min at 23°C, and then heated with an Infra red lamp during 10 s (temperature on surface 60-70°C)

Then, the two pieces were put together (adhesive to adhesive) and then press 10 s at 3.5 bars using a membrane press.

For non heated test: the adhesive was dried during 30 min at 23°C, and then the two pieces were put together (adhesive to adhesive) and then press 10 s at 3.5 bars using a membrane press.

The bonded assemblies were then conditioned at 23°C for 24 hours before carrying out the 180°C peel test.

The test sample was clamped into the jaws of Instrom 5543 tensile testing machine, and tested at a speed of 100 mm per minutes. The force required to peel back the leather (in a direction 180° to the bond line) is recorded in N/m. The reported value in the table 1 below is the average of three replicates for the composition tested.

**Table 1 : 180° Peel Strength at 23°C**

| | Without heating step (N/cm) | With heating step (N/m) |
|---|---|---|
| Dispersion D1 (prepared in example 1) | 14,4 | 15,9 |

The aqueous dispersion D1 advantageously leads to good adhesive properties in both situation : with heating step (15.9) and without heating step (14.4 N/cm). A higher peel strength value is obtained when heated to a low temperature of 60-70°C (on surface).

### Example 3 : 180° Peel Strength after Environmental Exposure

### Substrates : leather on leather

In this test, the effectiveness of bonding of an adhesive is tested as expressed in example 2 but before testing, and after the preparation of the samples, they are conditioned at ambient temperature for 24 hours, then exposed to an elevated temperature of 55°C and a relative humidity of 95% for 96 hours. Then, the peeling test were performed after a conditioning at 23°C 55% RH for 24 hours as described in Example 2. The reported value in the table 2 is the average of three replicates for the composition tested.

**Table 2 : 180° Peel Strength after Environmental Exposure**

| | Without heating step (N/cm) | With heating step (N/cm) |
|---|---|---|
| Dispersion D1 (prepared in example 1) | 19.2 | 21.8 |

The results demonstrate the obtaining of good adhesive properties in both situation : with heating step (21.8 N/cm) or without heating step (19.2 N/cm), after an ageing at 55°C and 95% relative humidity for 96h. These results show that the adhesive exhibit good resistance to hydrolysis and thermal conditions.

### Example 4 : Test of Tackiness

The aqueous dispersion was applied on 50 µm PET corona treated film with an Erichsen filmographer (wet thickness: 200µm)

After 24h drying, for one trial, 2 strips were cut:
- strip A: one with the dimension of 2.5x15cm (a loop will be done with it)
- strip B:with dimension of 2,5 x 5 cm

A dynamometer Instrom 5543 was used. A plate with a T form was blocked on the bottom jaw of the dynamometer. On the top of this plate, the strip B was placed (adhesive surface on the top), with a double-sided self-adhesives. A loop was created with the strip A and the extremity of the strip were blocked in the jaw, which is in the top (the surface of the adhesive is facing downside). Then, at a speed of 300 mm/mn the strip A was put in contact with the strip B by a downward movement by the dynamometer. The dynamometer was set to stop the movement when the contact surface between strip A and B is 6,25 mm2 (25 x 25 mm) When the surface was reached, the dynamometer pulled upward the strip A from strip B at a speed of 300 mm/mn. The dynamometer measured the force of the pulling which will be expressed in N/6,25 mm2

The reported value in the tables is the average of five replicates for each composition tested.

**Table 3 - Test of Tackiness**

| | Value (6,25 mm2) |
|---|---|
| Dispersion D1 (prepared in example 1) | 12 |

## Claims

1. Aqueous dispersion comprising water and a mixture of:
- A) an aqueous dispersion comprising water and a polyurethane polymer A-1) obtained by reacting at least the following components:
(a) a polyisocyanate compound;
(b) a polyol compound comprising :
(b1) a mixture of a polyester polyol (b2) and of a polycarbonate polyol (b3), each having a number-average molecular weight (Mn) higher or equal to 500 g/mol;
(b4) a polyester-polycarbonate polyol having a number-average molecular weight (Mn) higher or equal to 500 g/mol; or
(b5) a mixture of a polyester-polycarbonate polyol (b4) as defined above and at least one polyol selected from polyester polyol (b2) as defined above, polycarbonate polyol (b3) as defined above, and mixtures thereof;
provided that in the polyol compound b), the molar ratio -C(=O)-O- / -O-C(=O)-Oranges from 35/65 to 75/25;
(c) an emulsifier;
(d) an optional compound comprising at least one isocyanate-reactive group and at least one ionic or potentially ionic group;
(e) an optional compound comprising at least one isocyanate-reactive group and at least one non-ionic hydrophilic group;
(f) an optional amino compound having an amino functionality higher or equal to 1;
(g) an optional diol having a molecular weight lower than 400 g/mol;
- B) an aqueous dispersion other than A) comprising water and a polyurethane polymer B-1) obtained by reacting at least the following components:
(i) a diisocyanate ;
(ii) at least one polyether polyol having a number average molecular weight (Mn) ranging from 500 to 10 000 g/mol;
(iii) an amino compound having an amino functionality higher or equal to 1;
(iv) a compound comprising at least one isocyanate-reactive group and at least one ionic or potentially ionic group;
wherein said polyurethane B-1) is amorphous.

2. Aqueous dispersion according to claim 1, **characterized in that** the polyisocyanate compound (a) comprises hexamethylene diisocyanate, wherein the amount of hexamethylene diisocyanate is not less than 25 wt. % based on that the amount of the polyisocyanate compound (a) is 100 wt.%.

3. Aqueous dispersion according to anyone of claim 1 or claim 2, **characterized in that** the polyisocyanate compound (a) further comprise a polyisocyanate (a-1) other than the hexamethylene diisocyanate, preferably be selected from the group consisting of aliphatic polyisocyanate and cycloaliphatic polyisocyanate.

4. Aqueous dispersion according to claim 3, wherein the polyisocyanate compound (a-1) is isophorone diisocyanate.

5. Aqueous dispersion according to anyone of claim 1 to 4, **characterized in that** in the polyol compound b), the molar ratio -C(=O)-O- / -O-C(=O)-O- ranges from 35/65 to 75/25, preferably from 35/65 to 75/25, and even more preferably from 45/55 to 65/35.

6. Aqueous dispersion according to anyone of claim 1 to 5, **characterized in that** the polyester polyol (b2) has a number-average molecular mass (Mn) ranging from 500 g/mol to 10 000 g/mol, preferably from 750 g/mol to 5 000 g/mol.

7. Aqueous dispersion according to anyone of claim 1 to 6, **characterized in that** the polyester polyol (b2) is a polyester polyol resulting from the polycondensation of adipic acid and an aliphatic polyol, said aliphatic polyol being more preferably 1,4-butanediol.

8. Aqueous dispersion according to anyone of claim 1 to 7, **characterized in that** the polycarbonate polyol (b3) is obtained by reaction of at least a carbonate compound and a diol, optionally in presence of a catalyst, the diol comprising preferably not less than 40 wt. % of 1,6-hexanediol and/or hexanediol derivatives based on that the amount of the diol is 100 wt%.

9. Aqueous dispersion according to anyone of claim 1 to 8, **characterized in that** the polyurethane A-1) has an enthalpy of fusion ranging from 15 J/g to 60 J/g, and more preferably from 20 J/g to 50 J/g.

10. Aqueous dispersion according to anyone of claim 1 to 9, **characterized in that** the polyurethane A-1) has a glass transition temperature in the range between -100°C and -10°C, more preferably in the range between -60°C and -20°C, and even more preferably between -60°C and -40°C.

11. Aqueous dispersion according to anyone of claim 1 to 10, **characterized in that** the diisocyanate (ii) is selected from the group consisting of 2,4-toluylene diisocyanate (2,4-TDI), 2,6- toluylene diisocyanate (2,6-TDI), isophorone diisocyanate (IPDI), 1,4-xylylene diisocyanate (XDI), and mixtures thereof, the diisocyanate (ii) being even more preferably 2,4 and/or 2,6-TDI.

12. Aqueous dispersion according to anyone of claim 1 to 11, **characterized in that** the polyether polyol (ii) is chosen from polyoxyalkylene polyols, the linear or branched alkylene part comprising from 1 to 4 carbon atoms, more preferentially from 2 to 3 carbon atoms, the polyether polyol (ii) being even more preferably a polyoxypropylene polyol.

13. Aqueous dispersion according to anyone of claim 1 to 12, **characterized in that** the component (iv) is chosen among the sodium salts of N-(2-aminoethyl)-β-alanine, the sodium salts of 2-(2-aminoethylamino)ethanesulfonic acid and dimethylolpropionic acid.

14. Aqueous dispersion according to anyone of claim 1 to 13, **characterized in that** the polyurethane B-1) is an anionic polyurethane comprising at least one anionic group.

15. Aqueous dispersion according to anyone of claim 1 to 14, **characterized in that** the polyurethane B-1) has a glass transition temperature Tg ranging from -60°C to 0°C, preferably from -60°C to -20°C, more preferably from -60°C to -40°C, and even more preferably from -60°C to -40°C.

16. Aqueous dispersion according to anyone of claim 1 to 15, **characterized in that** it comprises:
- from 30 wt% to 90 wt%, preferably from 40 wt% to 80 wt % of dispersion A) as defined in any one claims 1 to 15, and
- from 10 wt% to 70 wt%, preferably from 25 wt% to 55 wt% of dispersion B) as defined in any one of claims 1 to 15,
based on the total weight of said aqueous dispersion.

17. Composition comprising the aqueous dispersion as defined in anyone of claims 1 to 16.

18. Use of the aqueous dispersion according to anyone of claims 1 to 16 or the composition according to claim 17, for bonding any substrate such as for example textiles, non woven textiles, leather, rubber materials, plastics.

19. Method of assembling two substrates by bonding, comprising:
- the application of the aqueous dispersion as defined in anyone of claims 1 to 16 or the composition according to claim 17 on at least one substrate;
- the evaporation of water;
- an optional step of heating the adhesive layer formed on one surface of the substrate to a temperature T1;
- the contact bonding of the two substrates.
